# EUROPÄISCHE PATENTANMELDUNG

(11) **EP 3 401 849 A1**
(43) Veröffentlichungstag der Anmeldung: **14.11.2018**
(21) Anmeldenummer: 17170127.9
(22) Anmeldetag: 09.05.2017
(51) Int. Cl.: G06Q 10/00, G05B 23/00

(54) **PRODUKTREIFEBESTIMMUNG EINES TECHNISCHEN SYSTEMS**

(71) Anmelder: dSPACE digital signal processing and control engineering GmbH, 33102 Paderborn (DE)
(72) Erfinder: Naundorf, Holger, 33104 Paderborn (DE)

(57) **Zusammenfassung**

Gemäß dem Gegenstand der Erfindung wird ein Verfahren zur Bestimmung einer Produktreife mittels Tests beansprucht, wobei ein Test die Ausführung eines Testfalls mittels einer Testumgebung angewendet auf ein Testobjekt umfasst, und für mindestens einen Test kein Ergebnis vorliegt, und das Verfahren die Schritte Vorgabe von Regeln zur Berechnung einer Wahrscheinlichkeit, dass ein Test, für welchen kein Ergebnis vorliegt, erfolgreich oder nicht erfolgreich sein wird, wobei die Regeln als Eingangsgrößen vorliegende oder erwartete Ergebnisse von Tests verwenden und als Ausgangsgrößen Wahrscheinlichkeiten zurückgeben und Berechnung der Wahrscheinlichkeit dass eine Test, für welchen kein Ergebnis vorliegt, erfolgreich sein wird, mittels mindestens eines Teils der vorgegebenen Regeln und Darstellung der Produktreife in Abhängigkeit der im vorherigen Schritt berechneten Wahrscheinlichkeiten umfasst.

## Beschreibung

Die Erfindung betrifft ein Verfahren und ein Testsystem zur Produktreifebestimmung eines technischen Systems gemäß dem Oberbegriff des Patentanspruchs 1.

Aus dem Stand der Technik sind Verfahren zur Produktreifebestimmung bekannt, bei den die Produktreife eines technischen Systems mittels Testabdeckung bestimmt wird. Unter Testabdeckung wird hierbei im Allgemeinen das Verhältnis von ausgeführten Tests zur Gesamtzahl von, für das technische System ausführbaren, Tests oder das Verhältnis von erfolgreich ausgeführten Tests zur Gesamtzahl von, für das technische System ausführbaren, Tests verstanden. In der Veröffentlichung der europäischen Patentanmeldung EP3082000A1 wird die Produktreife mittels Testabdeckung ermittelt und Vorschläge zur Verbesserung der Testabdeckung gemacht.

Vor diesem Hintergrund besteht die Aufgabe der Erfindung darin, eine Vorrichtung anzugeben, die den Stand der Technik weiterbildet.

Die Aufgabe wird durch ein Verfahren zur Bestimmung einer Produktreife mit den Merkmalen des Patentanspruchs 1, sowie durch ein Testsystem mit den Merkmalen des Patentanspruchs 15 gelöst. Vorteilhafte Ausgestaltungen der Erfindung sind Gegenstand von abhängigen Unteransprüchen.

Gemäß dem Gegenstand der Erfindung wird ein Verfahren zur Bestimmung einer Produktreife mittels Tests beansprucht, wobei ein Test die Ausführung eines Testfalls mittels einer Testumgebung angewendet auf ein Testobjekt umfasst, und für mindestens einen Test kein Ergebnis vorliegt, und das Verfahren die Schritte, Vorgabe von Regeln zur Berechnung einer Wahrscheinlichkeit, dass ein Test, für welchen kein Ergebnis vorliegt, erfolgreich oder nicht erfolgreich sein wird, wobei die Regeln als Eingangsgrößen vorliegende oder erwartete Ergebnisse von Tests verwenden und als Ausgangsgrößen Wahrscheinlichkeiten zurückgeben, Berechnung der Wahrscheinlichkeit, dass ein Test, für welchen kein Ergebnis vorliegt, erfolgreich sein wird, mittels mindestens eines Teils der vorgegebenen Regeln, sowie Darstellung der Produktreife in Abhängigkeit der im vorherigen Schritt berechneten Wahrscheinlichkeiten umfasst.

Ein Vorteil des erfindungsgemäßen Verfahrens ist es, dass die Produktreife eines technischen Systems nicht nur anhand schon ausgeführter Tests bewertet wird, sondern auch noch nicht ausgeführte Tests bei der Bewertung berücksichtigt werden. Für den Fall, dass nicht alle Tests ausgeführt werden, ergibt sich hierdurch insgesamt ein vollständigeres Bild der Produktreife, andernfalls erhält man zu einem früheren Zeitpunkt aussagekräftigere Aussage zur Produktreife, da auch die noch in der Zukunft liegenden Tests in die Bewertung mit einfließen. Des Weiteren kann auf der Grundlange dieser in die Zukunft schauenden Betrachtung eine verbesserte Auswahl der noch auszuführenden Tests und ihrer Reihenfolge getroffen werden. Weiter ist es Vorteilhaft, dass mittels des Verfahrens leichter einfach zugängliche aber aussagekräftige Darstellungen der Produktreife gefunden und dargestellt werden können. Aussagen zur Produktreife können einfach nach den vorliegenden Kriterien, wie z.B. den vorliegenden Testfällen, Testumgebungen oder Testobjekten zusammengefasst bzw. gruppiert werden.

In einer Ausführungsform liegt ein Testfall oder eine Testumgebung oder ein Testobjekt in einer ersten und einer zweiten Version vor, wobei die zweite Version einen Entwicklungsstand des Testfalls oder der Testumgebung oder des Testobjektes repräsentiert, der zeitlich nach dem Entwicklungsstand der ersten Version des Testfalls oder der Testumgebung oder des Testobjektes liegt.

In einer Weiterbildung der zuvor beschriebenen Ausführungsform wird mittels der Regeln oder zusätzlich zu den Regeln vorgegeben einen Teil der vorliegenden und erwarteten Ergebnisse der Test nicht bei Berechnung der Wahrscheinlichkeit, dass ein Test erfolgreich oder nicht erfolgreich sein wird, zu berücksichtigen, wobei der Teil nicht zu berücksichtigender Ergebnisse von einer oder mehrerer Versionen mindestens eines Testfalls, mindestens einer Testumgebung und/oder mindestens eines Testobjektes abhängt, wobei der mindestens eine Testfall, die mindestens eine Testumgebung und/oder das mindestens eine Testobjekt von dem Test umfasst wird.

In einer weiteren Ausführungsform repräsentieren die vorgegebenen Regeln einen technischen oder statistischen Zusammenhang zwischen einem ersten Testfall, einer ersten Testumgebung oder einem ersten Testobjekt in der ersten oder zweiten Version und einem zweiten Testfall, einer zweiten Testumgebung oder einem zweiten Testobjekt in der ersten oder zweiten Version.

In einer anderen Ausführungsform kann das Ergebnis eines Tests mindestens die Werte "Test erfolgreich" (passed) und "Test fehlgeschlagen" (failed) annehmen.

In einer weiteren anderen Ausführungsform werden die vorgegebenen Regeln automatisch mittels Analyse eines Datenbestandes zumindest eines Teils der Tests, umfassend Testfälle, Testumgebungen, Testobjekte und Ergebnisse, erstellt und/oder verifiziert.

In einer Weiterbildung der vorherigen Ausführungsform umfasst die Analyse eine statische Auswertung von Zusammenhängen von Tests, insbesondere Zusammenhänge von Tests mit positiven Ergebnissen.

In einer Ausführungsform werden vor dem Verfahrensschritt der Berechnung der Wahrscheinlichkeit eine erste Gruppe von Tests mittels einer statistischen Verteilung ermittelt, wobei für die erste Gruppe von Tests Ergebnisse vorliegen oder erzeugt werden.

In einer Weiterbildung der vorherigen Ausführungsform basiert die Ermittlung der Tests der ersten Gruppe von Tests auf einer oder mehr weiteren statischen Verteilungen der Testfälle, der Testumgebungen und/oder der Testobjekte.

In einer anderen Weiterbildung der vorherigen Ausführungsformen sind die statische Verteilung und/oder eine oder mehr der weiteren statischen Verteilungen zufällige Verteilungen.

In einer alternativen Weiterbildung der vorherigen Ausführungsformen hängt die Berechnung der Wahrscheinlichkeit dass ein Test, für welchen kein Ergebnis vorliegt, erfolgreich sein wird, von der statischen Verteilung der Tests, der Testfälle, der Testumgebungen und/oder der Testobjekte ab.

In einer weiteren Ausführungsform erfolgt die Darstellung der Produktreife in Form einer nummerischen, insbesondere prozentualen, Testabdeckung oder in Form einer, insbesondere farbkodierten Grafik.

In einer alternativen Ausführungsform werden ein oder mehr Kriterien vorgegeben und ein Teil der Tests, für welchen im zweiten Verfahrensschritt eine Wahrscheinlichkeit, dass der Test erfolgreich oder nicht erfolgreich sein wird, berechnet wurde, werden ausgeführt oder zur Ausführung vorgeschlagen, wobei die auszuführenden oder zur Ausführung vorgeschlagenen Tests mindestens eines der vorgegebenen Kriterien erfüllen.

In einer anderen Ausführungsform ist mindestens eines der vorgegebenen Kriterien die Über- oder Unterschreitung eines Schwellwertes für die Wahrscheinlichkeit, dass der Test erfolgreich oder nicht erfolgreich sein wird.

In einer weiteren Ausführungsform ist einem Testfall (TC), einer Testumgebung (TE), einem Testobjekt (SUT) oder einer Kombination von mindestens zwei Elementen aus Testfall (TC), Testumgebung (TE) und Testobjekt (SUT) eine Gewichtung zugeordnet und die Gewichtung wird bei Berechnung der Wahrscheinlichkeit, dass ein Test, für welchen kein Ergebnis vorliegt, erfolgreich oder nicht erfolgreich sein wird im zweiten Schritt und/oder bei der Darstellung der Produktreife im letzten Schritt berücksichtigt.

Ebenfalls gelöst wird die Aufgabe durch ein Testsystem zum Testen eines technischen Systems, wobei das Testsystem eines der zuvor beschriebenen Verfahren ausführt.

Die Erfindung wird nachfolgend unter Bezugnahme auf die Zeichnungen näher erläutert. Hierbei werden gleichartige Teile mit identischen Bezeichnungen beschriftet. Darin zeigt:
- Figur 1: schematisch die Zusammensetzung eines Tests (1) aus Testumgebung (TE), Testfall (TC) und Testobjekt (SUT),
- Figur 2: schematisch die Zusammenhänge zwischen Test (1), Testumgebung (TE), Testfall (TC), Testobjekt (SUT) und Ergebnis des Tests (TR),
- Figur 3: schematisch die Ablagen bzw. Speicherung von Testfällen (TC) und Testobjekten (SUT) und die Ableitung unterschiedlicher Tests (1) hieraus,
- Figur 4: schematisch die Vorhersage von Ergebnissen (TR) noch nicht ausgeführter Tests (1) mittels Regeln (5),
- Figur 5: schematisch die Vorhersage von Ergebnissen (TR) noch nicht ausgeführter Tests (1) mittels Regeln (5),
- Figur 6: eine tabellarische Darstellung von Ergebnissen von Tests (1) bezogen auf unterschiedliche Versionen eines Testobjektes (SUT),
- Figur 7: eine tabellarische Darstellung von vorhergesagten Ergebnissen von Test (1),
- Figur 8: schematisch die Ableitung von Regeln (5) aus den in einer Datenablage (3) abgelegten bzw. abgespeicherten Tests (1) und Ergebnissen von Tests (TR).

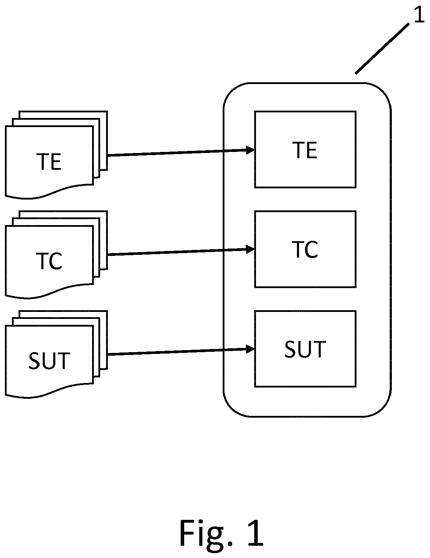

In der Abbildung der Figur 1 ist schematisch die Zusammensetzung eines Tests (1) dargestellt. Ein Test (1) umfasst dabei mindestens eine Testumgebung (TE) aus einer möglichen Mehrzahl von Testumgebungen (TE), einen Testfall (TC) aus einer möglichen Mehrzahl von Testfällen (TC) und ein Testobjekt (engl. "System under test") (SUT) aus einer möglichen Mehrzahl von Testobjekten (SUT).

Ziel der Reifebestimmung eines technischen Systems ist es Produkteigenschaften wie Performanz, Zuverlässigkeit oder Benutzerfreundlichkeit zu bewerten. Hieraus ergibt sich, ob eine nächste Stufe, ein sogenannter Meilenstein, in der Entwicklung des technischen Systems erreicht ist. Der in den meisten Fällen letzte Meilenstein ist die Freigabe des Produktes zum Verkauf bzw. die Auslieferung des Produktes. Ein Bereich in dem die Produktreife vor allem im Bezug auf Zuverlässigkeit und Sicherheit eine große Rolle spielt ist der Automobilsektor und hierbei auch die Entwicklung von Steuergeräten (engl. "electronic control unit", ECU). Die Testobjekte (SUT) können also Steuergeräte, die auf den Steuergeräten auszuführende Software oder Teil dieser Software sein. Die Auswahl der Testfälle (TC) hängt dabei unter anderem von der zu testenden Funktionalität und den zu erreichenden Zielen an Sicherheit und Zuverlässigkeit ab. In der Automobilbranche haben sich sogenannte "Hardware-in-the-loop"-Tests (HIL-Tests) für die Absicherung real vorliegender Steuergeräte etabliert. Mit entsprechenden Testwerkzeugen lassen sich auf den HIL-Testumgebungen (meist spezielle echtzeitfähige Rechner) Testfälle (TC) entwickeln und ausführen. Ein Beispiel für ein solches Testwerkzeug ist der Software-Produkt AutomationDesk der Firma dSPACE. Beim Testen von Steuergerätesoftware kommen auch Simulationsumgebungen, sogenannte Offline-Simulatoren zum Einsatz, welche zum Teil auf handelsüblichen PCs ausgeführt werden können. Von den hier beispielhaft dargestellten Testumgebungen (TE), HIL- und Offline-Simulator, können auch mehrere gleichartige oder verschiedene zum Testen eingesetzt werden. Hierdurch können für die Testfälle (TC) evtl. unterschiedliche Testumgebungen (TE) genutzt werden.

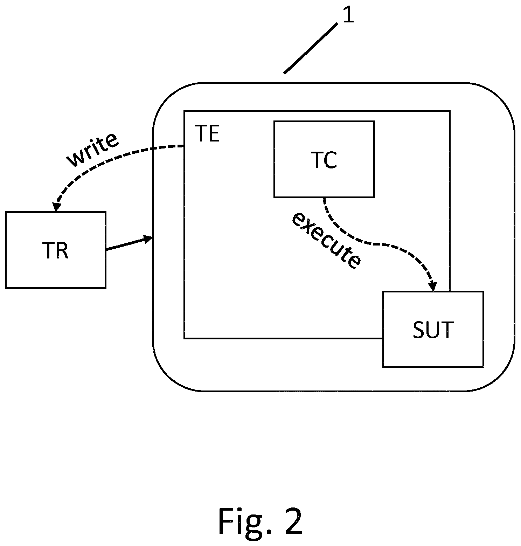

In der Abbildung der Figur 2 sind schematisch Zusammenhänge zwischen Test (1), Testumgebung (TE), Testobjekt (SUT) und Ergebnis (TR) eines Tests (1) dargestellt. Bei der Ausführung eines Tests (1) werden Daten erhoben, welche, zumindest teilweise, ein Ergebnis (TR) des Tests (1) darstellen oder aus welchen sich ein Ergebnis (TR) des Tests (1) ableiten lässt. Typischerweise wird ein Testfall (TC) innerhalb oder mittels einer Testumgebung (TE) zum Testen eines Testobjektes (SUT) ausgeführt (engl. "executed"). Bei oder nach dieser Ausführung werden Ergebnisse (TR) der Ausführung des Tests (1), auch Testergebnisse (TR) genannt, z.B. durch schreiben einer Datei (engl. "zweite") festgehalten. Diese Ergebnisse (TR) sind bzw. werden dem Test (1) zugeordnet, um bei der späteren Auswertung der Testergebnisse (TR) die Bedingungen der entsprechenden Testausführung nachvollziehen zu können. Typische Ergebnisse (TR) von Tests (1) sind "Test erfolgreich" (engl. "passed") und "Test fehlgeschlagen" (engl. "failed"). Da die Verwendung der Englischen Begriffe "passend" und "failed" im Umfeld des Testens und der Testverwaltung allgemein gebräuchlicher sind, werden diese auch im Folgenden verwendet.

Ist zum Beispiel das zu testende technische System ein Steuergerät für ein Automobil, ist das Testobjekt (SUT) typischerweise ein Prototyp dieses Steuergerätes welches mit einem HIL-Simulator verbunden ist. Der HIL-Simulator und die auf diesem ausführbare Testsoftware stellen dann eine Testumgebung (TE) dar. Dabei ist für die Nachvollziehbarkeit und Reproduzierbarkeit der Tests (1) die genaue Konfiguration des HIL-Simulator relevant und wird als eine Testumgebung (TE) definiert. Bei Änderungen an der Hard- oder Software des HIL-Simulators ergibt sich eine neue Testumgebung (TE). Nach der Ausführung des Tests (1), umfassend die Testumgebung (TE), den Testfall (TC) und das Testobjekt (SUT), werden die Ergebnisse (TR) des Tests (1) gespeichert und zum Zweck der Nachverfolgbarkeit mit dem Test (1) verknüpft. Diese Daten werden bevorzugt in einer Datenbank abgespeichert und von einem Testmanagement-Werkzeugt mit Anbindung an die Datenbank verwaltet. Ein Beispiel für ein solches Testmanagement-Werkzeug ist die Software SYNECT der Firma dSPACE.

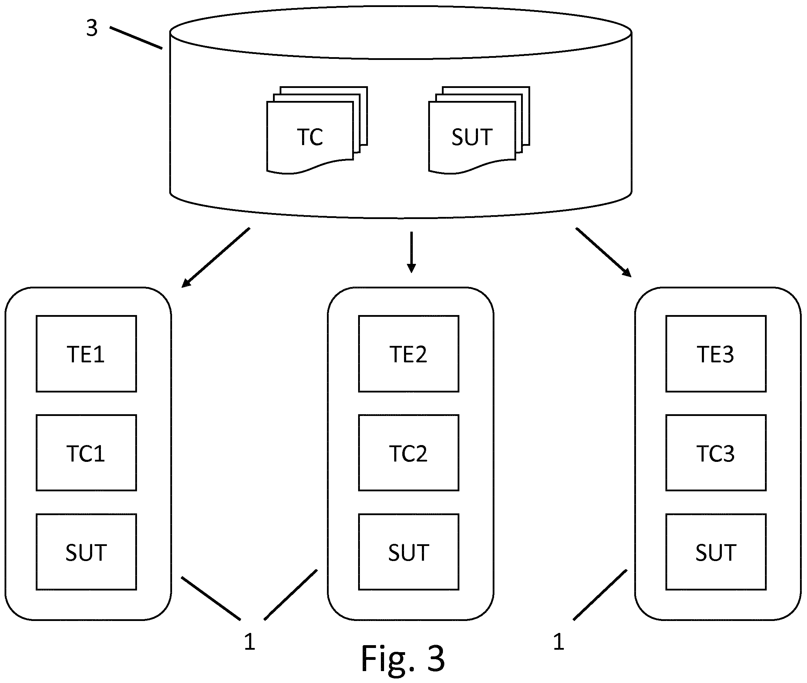

In der Abbildung der Figur 3 ist schematisch die Ablage bzw. Speicherung von Testfällen (TC) und Testobjekten (SUT) in einer Datenhaltung (3) dargestellt. Die Datenhaltung kann dabei ein Dateisystem, eine Datenbank oder eine andere, aus dem Stand der Technik bekannte, elektronische Datenhaltung sein. Ebenfalls ist es möglich, dass in der Datenhaltung lediglich Repräsentanten der eigentlichen Testfälle (TC) bzw. Testobjekte (SUT) oder Referenzen auf die eigentlichen Testfälle (TC) bzw. Testobjekte (SUT) abgelegt sind. Dies ist z.B. sinnvoll oder sogar notwendig, wenn die Testobjekte keine elektronisch vorliegenden Daten, sondern physikalisch vorliegende Objekte (z.B. elektronische Geräte) sind. Aus den abgelegten Testfällen (TC) und Testobjekten (SUT) können dann durch Verteilung auf ein oder mehrere Testumgebungen (TE) unterschiedliche Tests (1) erzeugt werden.

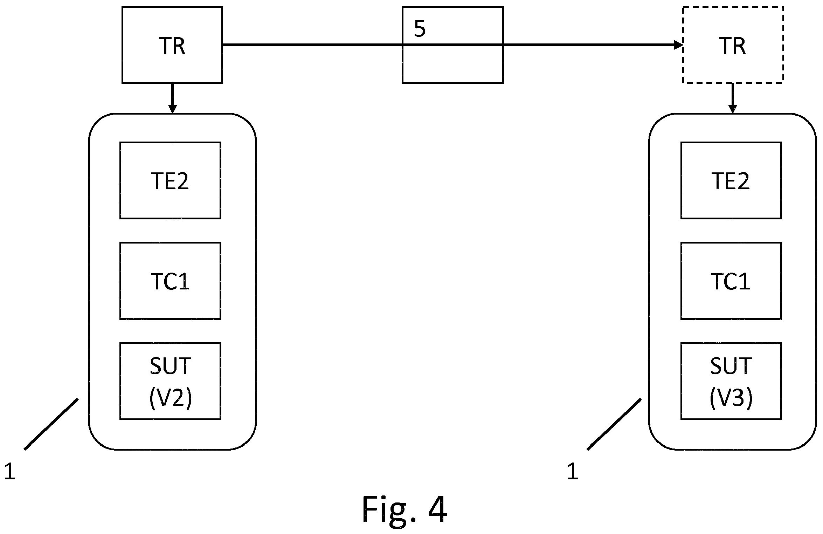

In der Abbildung der Figur 4 ist schematisch die erfindungsgemäße Bestimmung zu erwartender Testergebnisse (TR) dargestellt. Zur Unterscheidung der zu erwartenden Testergebnisse (TR) von den vorliegenden Testergebnissen (TR) sind in den Abbildungen erstere mit gestrichelten statt durchgezogenen Linien dargestellt. Zur Berechnung der Testergebnisse (TR) und zugeordneter Wahrscheinlichkeiten werden Regeln (5) verwendet. Diese Regeln (5) können vom Nutzer vorgegeben oder durch Auswertung von bestehenden Datenbeständen automatische erstellt werden. Ein Beispiel für eine solche Regel ist, dass ein Test (1), umfassend ein Testobjekt (SUT) in einer dritten Version (V3), zu 99% das gleiche Testergebnis (TR) liefert, wie ein Test (1), umfassend dasselbe Testobjekt (SUT) in einer zweiten Version (V2), wenn Testumgebung (TE) und Testfall (TC) bei beiden Tests (1) gleich sind.

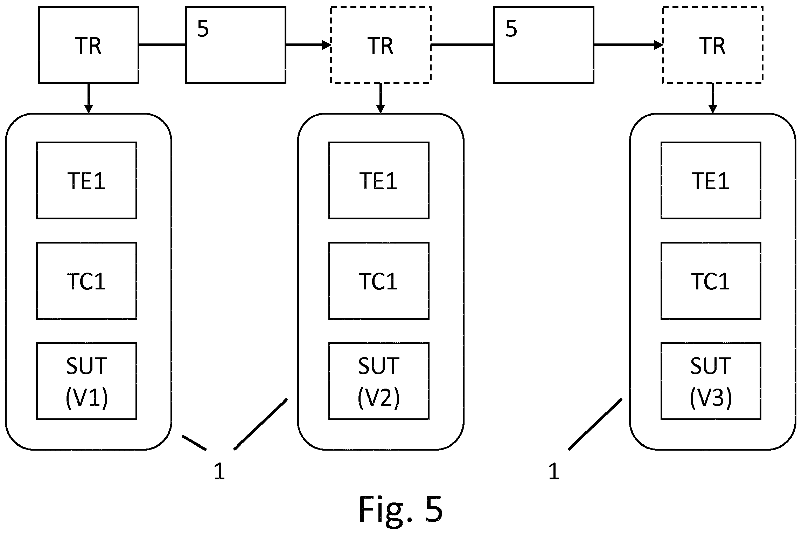

In der Abbildung der Figur 5 ist schematisch ebenfalls die erfindungsgemäße Bestimmung zu erwartender Testergebnisse (TR) dargestellt. Die zuvor beschriebene Berechnung eines Testergebnisses (TR) kann auch von einem zuvor berechneten statt von einem vorliegenden Testergebnis (TR) mittels einer Regel (5) abgeleitet werden. Dieser Fall ist in Figur 5 dargestellt, wobei sich die dargestellten Tests (1) nur in der Version (V1, V2, V3) des Testobjektes (SUT) unterscheiden. Das erwartete Ergebnis des Tests umfassend die Version 2 (V2) des Testobjektes (SUT) wird mittels einer Regel (5) aus dem vorliegenden Testergebnis (TR) des Tests (1) umfassend die Version 1 (V1) des Testobjektes (SUT) berechnet und das erwartete Ergebnis des Tests umfassend die Version 3 (V3) des Testobjektes (SUT) wird mittels einer Regel (5) aus dem erwarteten Testergebnis (TR) des Tests (1) umfassend die Version 2 (V2) des Testobjektes (SUT) berechnet. Dabei wird in der zweiten Berechnung die Wahrscheinlichkeit des erwarteten Testergebnisses (TR) aus der vorherigen Berechnung berücksichtigt. Ein Beispiel hierfür ist gegeben, wenn in dem vorherigen Beispiel zu Figur 4 das Ergebnis (TR) des Tests (1), umfassend des Testobjekt (SUT) in Version 2 (V2) nicht vorliegt, sondern in analoger Weise aus einem vorliegenden Testergebnis (TR) eines Tests (1), umfassend des Testobjekt (SUT) in Version 1 (V1), mit einer Wahrscheinlichkeit von 99% berechnet wird. Die Berechnung des Testergebnisses (TR) zum Test (1), umfassend des Testobjekt (SUT) in Version 3 (V3) mittels der gleichen Regel (5) führt ebenfalls dazu, dass das Testergebnis (TR) zum Test (1), umfassend das Testobjekt (SUT) in Version 3 (V3) zu 99% gleich dem Testergebnis (TR) zum Test (1), umfassend des Testobjekt (SUT) in Version 2 (V2). Insgesamt ergibt sich dann 98,01% (=(99/100)*(99/100)*100) für die Wahrscheinlichkeit, dass das Testergebnis (TR) zum Test (1), umfassend das Testobjekt (SUT) in Version 3 (V3) gleich ist wie das Testergebnis (TR) zum Test (1), umfassend das Testobjekt (SUT) in Version 1 (V1). Alternativ zu den unterschiedlichen Versionen (V1, V2, V3), sind auch andere Variationen der Testfälle (TC), Testumgebungen (TE) oder Testobjekte (SUT), wie z.B. Varianten oder unterschiedliche Elemente einer zusammengehörigen Gruppe, möglich.

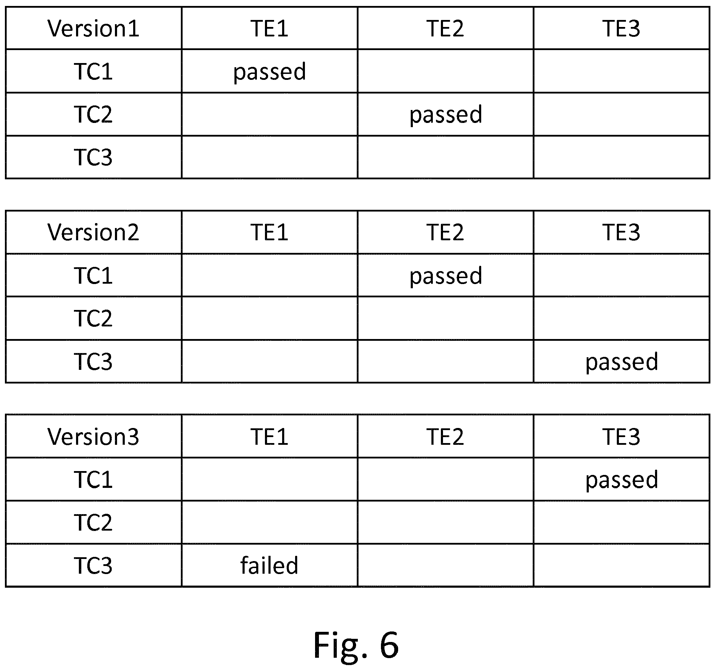

In der Abbildung der Figur 6 sind tabellarisch vorliegende Ergebnisse (TR) von Tests (1) dargestellt. Dabei liegen unterschiedliche Testumgebungen (TE1, TE2, TE3), unterschiedliche Testfälle (TC1, TC2, TC3) und ein Testobjekt (SUT) in unterschiedlichen, aufeinanderfolgenden Versionen (Version1, Version2, Version3) vor. Die leeren Felder der Tabellen repräsentieren Tests (1), für welche kein Ergebnis (TR) vorliegt. Damit stellt Figur 5 beispielhaft einen in einer Datenhaltung (3) abgelegten Datenbestand dar.

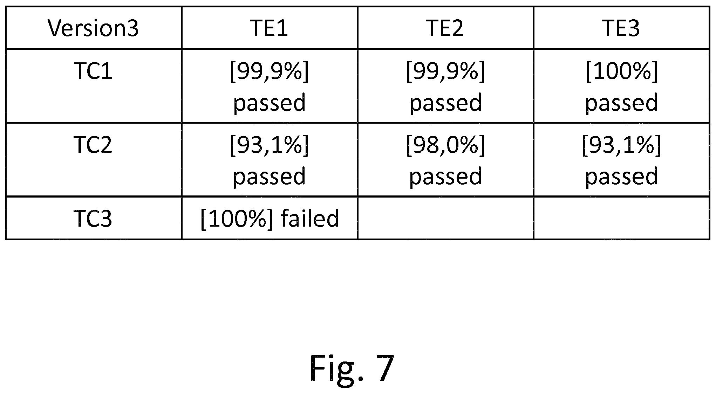

In der Abbildung der Figur 7 ist tabellarisch und in Analogie zu den Tabellen in Figur 5 die Produktereife der Version 3 des Testobjektes (SUT) dargestellt. Die einzelnen Felder der Tabelle enthalten nach dem erfindungsgemäßen Verfahren berechnete erwartete Ergebnisse der dargestellten Test (1), sowie die entsprechend berechneten zugehörigen Wahrscheinlichkeiten. Es ist ohne weiteres erkennbar, dass die mittels der Erfindung bestimmte und in Figur 7 gezeigte Darstellung einen deutlich besseren, weil vollständigeren Überblick über die Produktreife des Testobjektes (SUT) in der Version 3 gibt, als die vergleichbare Darstellung im unteren Drittel der Figur 6. Zur weiter verbesserten schnellen Lesbarkeit können die Felder der Tabelle zusätzlich oder alternativ zu den textuellen Inhalten auch farbig dargestellt werden. Typischer Weise wird hierbei grün für Tests (1) mit dem Ergebnis passed und rot für Tests (1) mit dem Ergebnis failed verwendet. Zur Darstellung der Wahrscheinlichkeiten ist es zusätzlich möglich den Farbton bzw. die Farbintensität der grünen und roten Felder zu variieren.

Unter der Annahme, dass das Testobjekt (SUT) ein Steuergeräte-Prototyp eines Steuergerätes für eine Automobil ist, welche für die Steuerung der Funktion des elektrischen Fensterhebers zuständig ist, könnten die Testumgebungen (TE1, TE2, TE3) HIL-Simulatoren mit unterschiedlichen Softwarekonfigurationen sein, welche unterschiedliche Fahrzeugtypen repräsentieren. Die Testfälle (TC1, TC2, TC3) könnten beispielhaft das Verhindern des Einklemmens bei sich schließendem Fenster (TC1), das Notfallöffnen des Fensters bei einem Unfall (TC2) und das automatische Schließen des Fensters beim Abschließen des Autos sein. Die sich erfindungsgemäß ergebende Produktreife, wie in Figur 7 dargestellt, kann nun je nach Bewertungsmaßstab und Status in der Entwicklung zu verschiedenen Schlüssen genutzt werden. Zum einen kann das Fehlen von positiven Testergebnissen zum Testfall TC3 dazu führen, dass dieser, nach evtl. Verbesserung der entsprechenden Funktionalität erneut bzw. überhaupt ausgeführt werden soll. Es könnte auch beschlossen werden, dass der aktuelle Meilenstein in der Entwicklung (z.B. sicherheitsrelevante Tests mit über 90% Wahrscheinlichkeit passed) erreicht wurde und die nächste Stufe der Entwicklung angegangen wird.

Ebenfalls können aus der erfindungsgemäß bestimmten Produktreife, wie in Figur 7 dargestellt, weitere Informationen gewonnen bzw. diese weiter verdichtete werden. Zum Beispiel kann geschlussfolgert werden, dass weniger als vier Tests (1) mit einer Wahrscheinlichkeit von über 90% als passed bewertet werden.

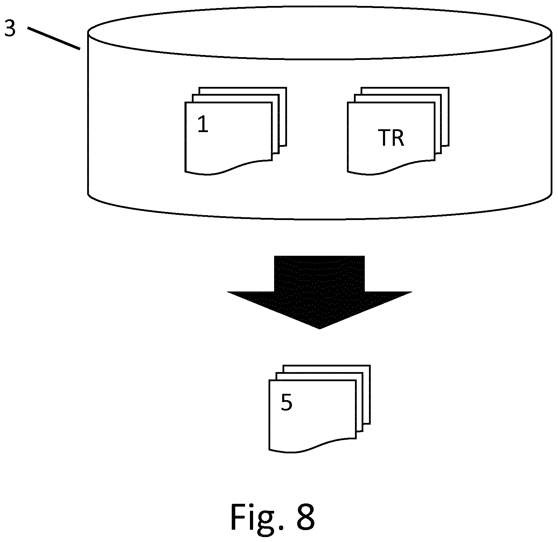

In der Abbildung der Figur 8 ist schematisch eine automatische Ableitung der Regeln (5), dargestellt durch den ausgefüllten Pfeil, aus einem, in einer Datenhaltung (3) gespeicherten, Datenbestand, umfassend Tests (1) und Testergebnisse (TR), dargestellt. Wie in Figur 2 dargestellt sind die Testergebnisse (TR) dabei Tests (1) zugeordnet. Die automatische Ableitung kann dabei z.B. aus einer häufig vorliegenden Korrelation eine oder mehr Regeln (5) erstellen. Ein mögliches Beispiel ist hier, dass ein Test (1), umfassend einen bestimmte Kombination von Testfall (TC) und Testobjekt (SUT), prozentual häufiger als eine vorgegebene Schwelle mit einem Ergebnis (TR) verknüpft ist und hieraus die Regel (5) abgeleitet wird, dass andere Tests (1), umfassend die gleiche Kombination von Testfall (TC) und Testobjekt (SUT), mit einer der Schwelle entsprechenden Wahrscheinlichkeit das gleich Ergebnis (TR) haben wird, wie die zuvor ermittelten Tests (1).

Da die Produktreife sich aus den vorhandenen Testergebnissen (TR) bestimmt, ist die Verteilung der vorhandenen Testergebnisse (TR) für die Qualität der berechneten Produktreife mit ausschlaggebende. Wurden zum Beispiel alle vorliegenden Testergebnisse (TR) mit nur einer Testumgebung (TE) erzeugt, ist die Qualität der Aussagen über Testergebnissen (TR) auf anderen Testumgebungen (TE) wahrscheinlich wenig aussagekräftigt. Um eine möglichst aussagekräftige Produktreife zu erhalten, kann es daher von Vorteil sein, die vorliegenden Testergebnisse (TR) anhand einer vorgebbaren Verteilung von zuvor auszuführenden Tests (1) zu erzeugen. Diese Verteilung kann z.B. eine Zufallsverteilung sein. Das Wissen um die Art der Verteilung der vorhandenen Testergebnisse (TR), kann dann auch zusätzlich bei der Bewertung der Produktreife verwendet werden.

## Patentansprüche

1. Verfahren zur Bestimmung einer Produktreife mittels Tests,
wobei ein Test die Ausführung eines Testfalls (TC) mittels einer Testumgebung (TE) angewendet auf ein Testobjekt (SUT) umfasst, und für mindestens einen Test kein Ergebnis (TR) vorliegt, und
das Verfahren folgende Schritte umfasst:
a) Vorgabe von Regeln zur Berechnung einer Wahrscheinlichkeit, dass ein Test, für welchen kein Ergebnis vorliegt, erfolgreich oder nicht erfolgreich sein wird,
wobei die Regeln als Eingangsgrößen vorliegende oder erwartete Ergebnisse von Tests verwenden und als Ausgangsgrößen Wahrscheinlichkeiten zurückgeben,
b) Berechnung der Wahrscheinlichkeit dass eine Test, für welchen kein Ergebnis vorliegt, erfolgreich oder nicht erfolgreich sein wird, mittels mindestens eines Teils der vorgegebenen Regeln, und
c) Darstellung der Produktreife in Abhängigkeit der im vorherigen Schritt berechneten Wahrscheinlichkeiten.

2. Verfahren nach Anspruch 1, wobei
ein Testfall (TC) oder eine Testumgebung (TE) oder ein Testobjekt (SUT) in einer ersten und einer zweiten Version vorliegt,
wobei die zweite Version einen Entwicklungsstand des Testfalls (TC) oder der Testumgebung (TE) oder des Testobjektes (SUT) repräsentiert, der zeitlich nach dem Entwicklungsstand des Testfalls (TC) oder der Testumgebung (TE) oder des Testobjektes (SUT) liegt.

3. Verfahren nach Anspruch 2, wobei
mittels der Regeln oder zusätzlich zu den Regeln vorgegeben wird einen Teil der vorliegenden und erwarteten Ergebnisse der Test nicht bei Berechnung der Wahrscheinlichkeit, dass ein Test erfolgreich oder nicht erfolgreich sein wird, zu berücksichtigen, wobei der Teil nicht zu berücksichtigender Ergebnisse von einer oder mehrerer Versionen mindestens eines Testfalls (TC), mindestens einer Testumgebung (TE) und/oder mindestens eines Testobjektes (SUT) abhängt, wobei der mindestens eine Testfall (TC), die mindestens eine Testumgebung (TE) und/oder das mindestens eine Testobjekte (SUT) von dem Test umfasst wird.

4. Verfahren nach einem der vorherigen Ansprüche, wobei
die vorgegebenen Regeln einen technischen oder statistischen Zusammenhang zwischen mindestens einem ersten Testfall (TC), einer ersten Testumgebung (TE) oder eines ersten Testobjektes (SUT) in der ersten oder zweiten Version und mindestens einem zweiten Testfall (TC), einer zweiten Testumgebung (TE) oder eines zweiten Testobjektes (SUT) in der ersten oder zweiten Version repräsentieren.

5. Verfahren nach einem der vorherigen Ansprüche, wobei
das Ergebnis eines Tests mindestens die Werte "Test erfolgreich" (passed) und "Test fehlgeschlagen" (failed) annehmen kann.

6. Verfahren nach einem der vorherigen Ansprüche, wobei
die vorgegebenen Regeln automatisch mittels Analyse eines Datenbestandes zumindest eines Teils der Tests, umfassend Testfälle (TC), Testumgebungen (TE), Testobjekte (SUT) und Ergebnisse, erstellt und/oder verifiziert werden.

7. Verfahren nach Anspruch 6, wobei
die Analyse eine statische Auswertung von Zusammenhängen von Tests, insbesondere Zusammenhänge von Tests mit positiven Ergebnissen, umfasst.

8. Verfahren nach einem der vorherigen Ansprüche, wobei
vor dem Verfahrensschritt b) eine erste Gruppe von Tests mittels einer statistischen Verteilung ermittelt wurde und für die erste Gruppe von Tests Ergebnisse vorliegen oder erzeugt werden.

9. Verfahren nach Anspruch 8, wobei
die Ermittlung der Tests der ersten Gruppe von Tests auf einer oder mehr weiteren statischen Verteilungen der Testfälle (TC), der Testumgebungen (TE) und/oder der Testobjekte (SUT) basiert.

10. Verfahren nach Anspruch 8 oder 9, wobei
die statische Verteilung und/oder eine oder mehr der weiteren statischen Verteilungen zufällige Verteilung sind.

11. Verfahren nach einem der Ansprüche 8 bis 10, wobei
die Berechnung der Wahrscheinlichkeit dass ein Test, für welchen kein Ergebnis vorliegt, erfolgreich oder nicht erfolgreich sein wird, von der statischen Verteilung der Tests, der Testfälle (TC), der Testumgebungen (TE) und/oder der Testobjekte (SUT) abhängt.

12. Verfahren nach einem der vorherigen Ansprüche, wobei
die Darstellung der der Produktreife in Form einer nummerischen, insbesondere prozentualen, Testabdeckung oder in Form einer, insbesondere farbkodierten Grafik erfolgt.

13. Verfahren nach einem der vorherigen Ansprüche, wobei
ein oder mehr Kriterien vorgegeben werden und ein Teil der Test für welchen in Verfahrensschritt b) eine Wahrscheinlichkeit, dass der Test erfolgreich oder nicht erfolgreich sein wird, berechnet wurde ausgeführt oder zur Ausführung vorgeschlagen werden, wobei die auszuführenden oder zur Ausführung vorgeschlagenen Tests mindestens eines der vorgegebenen Kriterien erfüllen.

14. Verfahren nach Anspruch 13, wobei
mindestens eines der vorgegebenen Kriterien die Über- oder Unterschreitung eines Schwellwertes für die Wahrscheinlichkeit, dass der Test erfolgreich oder nicht erfolgreich sein wird, ist.

15. Verfahren nach einem der vorherigen Ansprüche, wobei
einem Testfall (TC), einer Testumgebung (TE), einem Testobjekt (SUT) oder einer Kombination von mindestens zwei Elementen aus Testfall (TC), Testumgebung (TE) und Testobjekt (SUT) eine Gewichtung zugeordnet ist und die Gewichtung bei Berechnung der Wahrscheinlichkeit dass eine Test, für welchen kein Ergebnis vorliegt, erfolgreich oder nicht erfolgreich sein wird in Schritt b) und/oder der Darstellung der Produktreife in Schritte c) berücksichtigt wird.

16. Testsystem zum Testen eines technischen Systems, insbesondere eines elektronischen Steuergerätes oder eines Teils eines elektronischen Steuergerätes, wobei der Testsystem eines der Verfahren der Ansprüche 1 bis 15 ausführt.
